# EUROPÄISCHE PATENTSCHRIFT

(11) **EP 1 749 620 B1**
(45) Veröffentlichungstag und Bekanntmachung des Hinweises auf die Patenterteilung: **11.02.2009**
(21) Anmeldenummer: 06015120.6
(22) Anmeldetag: 20.07.2006
(51) Int. Cl.: B25F 3/00, B23B 45/00

(54) **Vorrichtung zum Befestigen eines Vorsatzgerätes an einer Handwerkzeugmaschine**
Fixing mechanism for an attachment for a hand-held machine tool
Dispositif de fixation d'un accessoire sur une machine-outil

(30) Priorität: 04.08.2005 DE 102005036642
(43) Veröffentlichungstag der Anmeldung: 07.02.2007
(73) Patentinhaber: Narex Ceska Lipa a.s., 47037 Ceska Lipa (CZ)
(72) Erfinder: Ryger, David, 47006 Ceska Lipa (CZ); Kirchner, Manfred, 73272 Neidlingen (DE)
(74) Vertreter: Bregenzer, Michael

(56) Entgegenhaltungen:
- DE-A1- 4 445 597
- DE-C- 671 811
- US-A- 3 789 706
- US-A- 5 863 159
- US-A1- 2005 009 458
- US-A1- 2005 048 884

## Beschreibung

Die Erfindung betrifft eine Vorrichtung zum Befestigen eines Vorsatzgerätes an einer Handwerkzeugmaschine wie Bohrmaschine oder dergleichen, wobei die Handwerkzeugmaschine eine motorisch antreibbare Antriebswelle aufweist, die vor einen konzentrisch zur Antriebswelle angeordneten Spannhals vorsteht, und das Vorsatzgerät eine mit der Antriebswelle kuppelbare Eingangswelle und eine zur Eingangswelle konzentrische, auf den Spannhals steckbare und mit diesem verspannbare Ringpartie aufweist, die einen Spannbereich mit mindestens einer Spannzunge bildet, wobei dem Spannbereich ein ihn in Umfangsrichtung umschließendes und die mindestens eine Spannzunge übergreifendes Spannelement zugeordnet ist, das zwischen einem ungespannten Zustand und einem gespannten Zustand verstellbar ist und in seinem ungespannten Zustand ein Aufstecken und Abziehen der Ringpartie vom Spannhals gestattet und in seinem gespannten Zustand gegen den Spannbereich und die mindestens eine Spannzunge wirkt, sodass die Ringpartie mit dem Spannhals verspannt wird.

Handwerkzeugmaschinen wie Bohrmaschinen sind, je nach dem, ob man an ihnen ein Spannfutter oder ein anderes Vorsatzgerät anbringt, für unterschiedliche Zwecke verwendbar. Bei dem Vorsatzgerät kann es sich beispielsweise um einen Winkelvorsatz oder einen Exzentervorsatz mit einer gegenüber der maschinenseitigen Antriebswelle winkelig oder parallel versetzt abgehenden Ausgangswelle handeln, mit der ein vom Vorsatzgerät gehaltenes Werkzeug, beispielsweise ein Schraubendreherbit angetrieben wird.

Bei einer aus der US 2005/0009458 A1 oder der US 2005/0048884 A1 bekannten Vorrichtung weist die Ringpartie des Vorsatzgerätes von ihrer Stirnseite ausgehende, axial verlaufende Längsschlitze auf, sodass eine entsprechende Anzahl von axial verlaufenden Spannzungen gebildet wird, denen ein nach Art einer Rohrschelle ausgebildetes Spannelement zugeordnet ist.

Bei dieser Befestigungsart wird die Ringpartie des Vorsatzgerätes nicht ringsum gleichmäßig gegen den Spannhals gepresst. Daher kann sich eine ungenaue Zentrierung des Vorsatzgerätes mit Bezug auf die Handwerkzeugmaschine ergeben.

Ausgehend hiervon besteht die Aufgabe der vorliegenden Erfindung darin, eine Befestigungsvorrichtung der eingangs genannten Art zu schaffen, mit der sich das Vorsatzgerät mit möglichst exakt zentrierter Ausrichtung am Spannhals der Handwerkzeugmaschine befestigen lässt.

Diese Aufgabe wird erfindungsgemäß dadurch gelöst, dass die mindestens eine Spannzunge in Umfangsrichtung verläuft, so dass die mindestens eine Spannzunge in Umfangsrichtung einenends in den sonstigen Spannbereich übergeht und ansonsten freigeschnitten ist, wobei die mindestens eine Spannzunge eine größere Dicke als der sonstige Spannbereich aufweist und bei ungespanntem Spannelement nach radial außen hin etwas über den sonstigen Spannbereich vorsteht, und dass die Ringpartie einen in axialer Richtung dem Spannbereich benachbarten, bei auf den Spannhals gesteckter Ringpartie auf dem Spannhals sitzenden Zentrier-Ringbereich bildet, der in Umfangsrichtung ununterbrochen umläuft, sodass er beim Festspannen der Ringpartie auf dem Spannhals unverändert bleibt.

Auf diese Weise werden die Zentrierfunktion und die Spannfunktion aufgeteilt. Das Zentrieren erfolgt durch den ununterbrochen umlaufenden Zentrier-Ringbereich, der beim Festspannen unverändert bleibt, sodass auch die Zentrierung nicht beeinflusst wird. Das Verspannen erfolgt dagegen mit Hilfe der mindestens einen Spannzunge, die durch das Spannelement gegen den Spannhals gepresst wird. Da sich die mindestens eine Spannzunge in Umfangsrichtung erstreckt, kann sie verhältnismäßig lang ausgebildet werden. Da die Spannzunge ferner nach radial außen hin etwas vorsteht, greift das Spannelement als erstes an der mindestens einen Spannzunge an und drückt sie nach innen.

Die erfindungsgemäße Befestigungsvorrichtung ist konstruktiv einfach und lässt sich verhältnismäßig kostengünstig verwirklichen.

Zweckmäßigerweise weist der Spannbereich mindestens zwei in Umfangsrichtung mit gleichmäßiger Verteilung hintereinander angeordnete Spannzungen auf, sodass eine zusätzliche Zentrierung des Vorsatzgerätes durch die Spannzungen erfolgt.

Das Spannelement kann von einem Spannband gebildet werden. Um die Position des Spannbandes oder eines anderen umlaufenden Spannelementes in axialer Richtung zu sichern, kann der Spannbereich eine umlaufende Ringnut aufweisen, in die das Spannelement einsitzt.

Die Betätigung des Spannelementes erfolgt zweckmäßigerweise mittels einer an ihm angeordneten Exzentereinrichtung, mit der das Spannelement aus seinem ungespannten Zustand in seinen gespannten Zustand und umgekehrt überführt werden kann. Der ununterbrochen umlaufende Zentrier-Ringbereich ist dem Spannbereich zweckmäßigerweise in axialer Richtung zur Stirnseite der Ringpartie hin vorverlagert.

Dabei ist bei einer bevorzugten Ausführungsform vorgesehen, dass die Ringpartie an ihrer Stirnseite in Umfangsrichtung verteilt angeordnete stirnseitig offene Verriegelungsausnehmungen oder vorstehende Verriegelungsvorsprünge aufweist, denen mindestens ein Verriegelungsvorsprung bzw. mindestens eine Verriegelungsausnehmung an der Handwerkzeugmaschine zugeordnet ist, der bzw. die beim Aufstecken der Ringpartie auf den Spannhals mit einer der Verriegelungsausnehmungen bzw. einem der Verriegelungsvorsprünge in Eingriff gelangt.

Diese Verriegelung ist in Umfangsrichtung wirksam, sodass sich unabhängig von dem Verspannen der Ringpartie des Vorsatzgerätes auf den Spannhals eine drehfeste Verbindung ergibt. Da am Vorsatzgerät mehrere Verriegelungsvorsprünge bzw. Verriegelungsausnehmungen winkelversetzt zueinander angeordnet sind, kann das Vorsatzgerät in einer entsprechenden Anzahl von Winkelstellungen befestigt werden.

Ein Ausführungsbeispiel der Erfindung wird nachstehend anhand der Zeichnung erläutert. Es zeigen:
- Figur 1: den vorderen Bereich einer Handbohrmaschine mit daran befestigten Vorsatzgerät in Gestalt eines Winkelvorsatzes in Seitenansicht und dabei zur Hälfte geschnitten,
- Figur 2: die Anordnung nach Figur 1 bei von der Handbohrmaschine getrenntem Vorsatzgerät in Schrägansicht,
- Figur 3: das Vorsatzgerät in Schrägansicht von hinten her gesehen, wobei sich das Spannelement in seinem ungespannten Zustand befindet,
- Figur 4: die Anordnung nach Figur 3 in anderer Schrägansicht von hinten her gesehen und
- Figur 5: das gleiche Vorsatzgerät im Querschnitt gemäß der Schnittlinie V-V in Figur 1, wobei im Unterschied zur Figur 1 die Handbohrmaschine fehlt.

Eine beispielsweise elektrisch betriebene Handwerkzeugmaschine 1 wie Handbohrmaschine oder dergleichen, von der nur der vordere Bereich dargestellt ist, enthält einen Motor und eine regelmäßig unter Zwischenschalten eines Getriebes von dem Motor aus angetriebene Antriebswelle 2, die beim Betrieb um die Wellenachse 3 rotiert.

Mit der Antriebswelle 2 kann ein nicht gezeigtes Bohrfutter oder dergleichen verbunden werden. Die Antriebswelle 2 kann ferner, wie dargestellt, eine stirnseitig ausmündende Mehrkantausnehmung zur Aufnahme eines Bits, beispielsweise ein Schraubendreherbit, aufweisen, sodass sich die Werkzeugmaschine als Schrauber verwenden lässt.

Die Handwerkzeugmaschine 1 weist ferner an ihrer Vorderseite einen festestehenden, zur Antriebswelle 2 konzentrischen Spannhals 4 zylindrischer Gestalt auf. Die Antriebswelle 2 steht vor den Spannhals 4 vor.

Der Motor kann von einem in die Werkzeugmaschine 1 integrierten Akku gespeist oder durch ein von der Werkzeugmaschine 1 abgehendes Kabel an ein äußeres Stromnetz angeschlossen werden.

Derartige Handwerkzeugmaschinen sind in großer Vielfalt auf dem Markt, sodass sich eine allgemeine Beschreibung hierzu erübrigt.

Die vorliegende Erfindung beschäftigt sich mit der Befestigung eines Vorsatzgerätes 5 an der Werkzeugmaschine 1. Bei dem Vorsatzgerät 5 kann es sich beispielsweise, wie dargestellt, um einen Winkelvorsatz handeln. Das Vorsatzgerät 5 wird in axialer Richtung der Antriebswelle 2 an die Werkzeugmaschine 1 angesteckt. Dabei gelangt eine mit der Antriebswelle 2 kuppelbare Eingangswelle 6 des Vorsatzgerätes 5 in drehfesten Eingriff mit der Antriebswelle 2. Hierzu sind an der Antriebswelle 2 und an der Eingangswelle 6 mehrere über den Umfang verteilt angeordnete Mitnahmevorsprünge 7 bzw. 8 vorgesehen, die durch Zwischenräume 9 bzw. 10 voneinander getrennt sind. Beim Anstecken des Vorsatzgerätes 5 an die Werkzeugmaschine 1 gelangen die Mitnahmevorsprünge 7 der Antriebswelle 3 in die Zwischenräume 10 der Eingangswelle 6 und die Mitnahmevorsprünge 8 der Eingangswelle 6 in die Zwischenräume 9 der Antriebswelle 2.

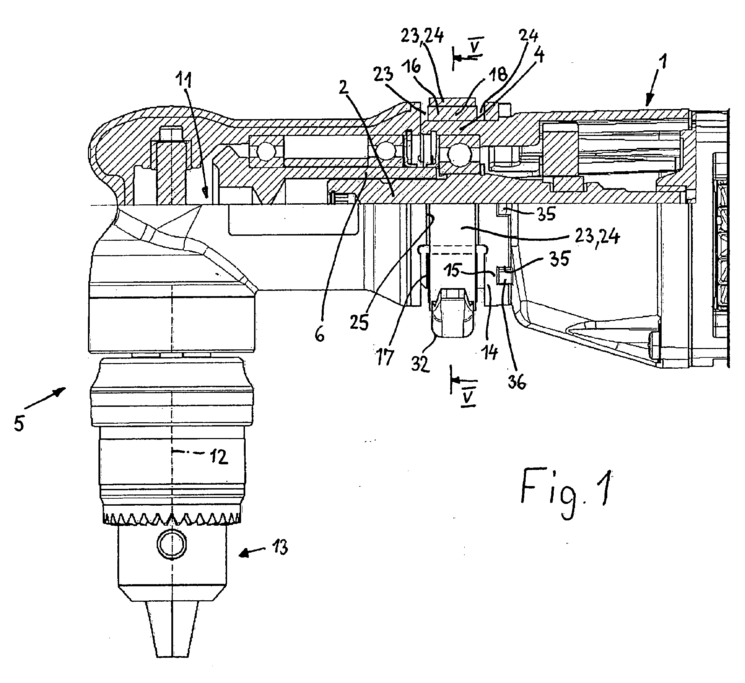

Im Falle eines Winkelvorsatzes als Vorsatzgerät 5 treibt die Eingangswelle 6 über ein nicht weiter dargestelltes Winkelgetriebe 11 eine rechtwinkelig zu ihr verlaufende Ausgangswelle, die nur durch ihre Wellenachse 12 in Figur 1 strichpunktiert angedeutet ist. Im dargestellten Falle weist das Vorsatzgerät 5 ausgangsseitig ein Bohrfutter 13 auf. An Stelle eines Bohrfutters könnte es sich jedoch auch um eine Bitaufnahme handeln.

An Stelle des dargestellten Winkelvorsatzes könnte es sich auch um ein anderes Vorsatzgerät handeln.

Das Vorsatzgerät 5 weist an seinem im befestigten Zustand der Werkzeugmaschine 1 zugewandten Ende eine zur Eingangwelle 6 konzentrische Ringpartie 14 mit im Wesentlichen zylindrischer Gestalt auf, deren Innendurchmesser dem Außendurchmesser des Spannhalses 4 entspricht, sodass das Vorsatzgerät 5 mit seiner Ringpartie 14 auf den Spannhals 4 der Werkzeugmaschine 1 steckbar ist. Nach dem Aufstecken wird die Ringpartie 14 mit dem Spannhals 4 verspannt.

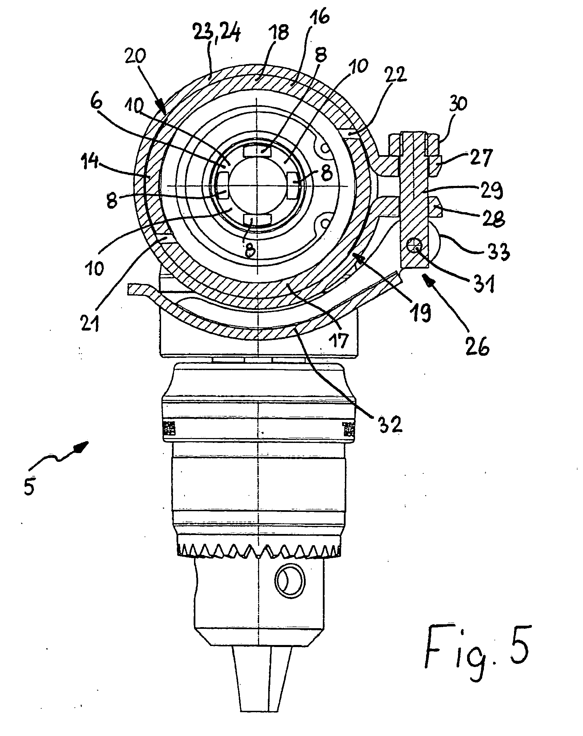

Die Ringpartie 14 weist einen ununterbrochen umlaufenden Ringbereich 15 auf, dem in axialer Richtung ein Spannbereich 16 benachbart ist, der in Umfangsrichtung verlaufende Spannzungen 17, 18 bildet. Prinzipiell würde eine solche Spannzunge ausreichen. Bevorzugt sind jedoch mehrere, beim Ausführungsbeispiel zweckmäßigerweise zwei in Umfangsrichtung mit gleichmäßiger Verteilung hintereinander angeordnete Spannzungen 17, 18 vorgesehen. Die Spannzungen 17, 18 gehen in Umfangsrichtung einenends einstückig in den sonstigen Spannbereich 16 der Ringpartie 14 über und sind ansonsten freigeschnitten. In Figur 5 sind die beiden Stellen, von denen die beiden Spannzungen 17, 18 in Umfangsrichtung abgehen, mit den Bezugsziffern 19 und 20 bezeichnet. Insbesondere aus Figur 5 geht bei jeder Spannzunge 17, 18 der der einstückigen Verbindungsstelle 19, 20 in Umfangsrichtung entgegengesetzte Spalt 21, 22 im Spannbereich 16 hervor, an dem die betreffende Spannzunge 17, 18 endet. Die die jeweilige Spannzunge seitlich begrenzenden, in Umfangsrichtung verlaufenden Schlitze 23, 24 sind aus den Figuren 1, 3 und 4 ersichtlich.

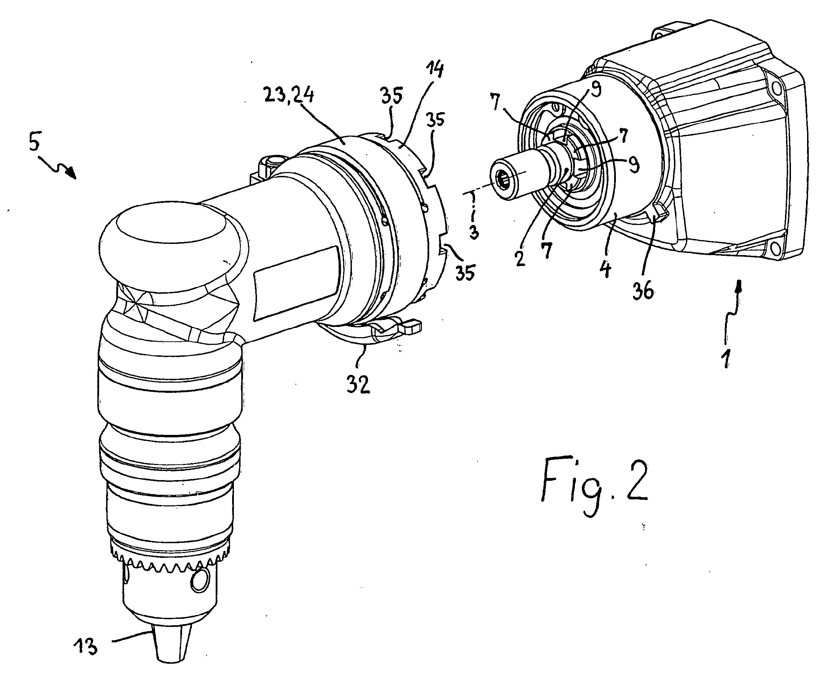

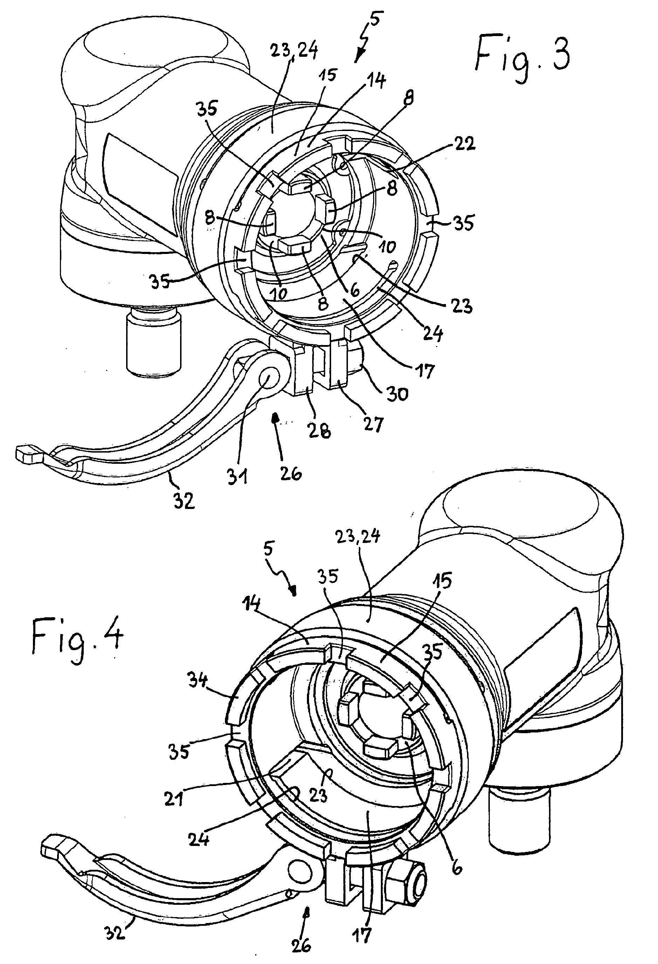

Dem Spannbereich 16 der Ringpartie 14 ist ein den Spannbereich 16 in Umfangsrichtung umschließendes und die Spannzungen 17, 18 übergreifendes Spannelement 23 zugeordnet, das zwischen einem ungespannten Zustand (Figuren 3 und 4) und einem gespannten Zustand (Figuren 1, 2 und 5) verstellbar ist und in seinem gespannten Zustand gegen den Spannbereich 16 und die Spannzungen 17, 18 wirkt, sodass die Ringpartie 14 des Vorsatzgerätes 5 mit dem Spannhals 4 verspannt wird. Im ungespannten Zustand des Spannelements 23 kann die Ringpartie 14 des Vorsatzgerätes 5 vom Spannhals 4 abgezogen bzw. auf den Spannhals 4 aufgesteckt werden.

Die Spannzungen 17, 18 stehen bei ungespanntem Spannelement 23 am Außenumfang des Spannbereichs 16 nach radial außen hin etwas über den sonstigen Spannbereich 16 vor, sodass das Spannelement 23 sicher gegen die Spannzungen 17 wirkt und diese gegen den Spannhals 4 drückt. Demgemäß haben die Spannzungen 17, 18 eine etwas größere Materialdicke als der sonstige Spannbereich 16.

Das Spannelement 23 weist zweckmäßigerweise eine bandförmige Gestalt auf und wird somit von einem Spannband 24 gebildet.

Damit das Spannelement 23 in axialer Richtung nicht verrutschen kann, weist der Spannbereich 16 eine umlaufende Ringnut 25 auf, in die das Spannelement 23 einsitzt.

Das Spannelement 23 wird werkzeuglos mit der Hand betätigt. Dies kann auf verschiedene Weise erreicht werden. Zweckmäßigerweise ist vorgesehen, dass das Spannelement 23 mittels einer an ihm angeordneten Exzentereinrichtung 26 in seinen gespannten Zustand überführbar ist. Das Spannelement 23 weist zwei nach radial außen hin abgewinkelte Endbereiche 27, 28 auf, die von einem Spannbolzen 29 durchgriffen werden, der einerseits mit einem radial vorstehenden, außen am zugewandten Spannelement-Endbereich 27 anliegendes Kopfstück versehen ist und andererseits über eine Gelenkachse 31 mit einem in Unfangsrichtung um die Gelenkachse 31 schwenkbaren Exzenterhebel 32 verbunden ist. Der Exzenterhebel 32 liegt mit einer exzentrisch zur Gelenkachse 31 verlaufenden Kurvenfläche 33 an der dem Kopfstück 30 entgegengesetzten Außenseite des anderen Spannelement-Endbereichs 28 an, sodass die beiden Spannelement-Endbereiche 27,28 zwischen dem Kopfstück 30 und der Kurvenfläche 33 angeordnet sind. Die exzentrische Kurvenfläche 33 verläuft so, dass die beiden Spannelement-Endbereiche 27, 28 bei gegen das Spannelement 23 geschwenkten Exzenterhebel 32 aufeinanderzu gezogen werden, sodass sich das Spannelement 23 in seinem gespanntem Zustand befindet. Schwenkt man den Exzenterhebel 32 vom Spannelement 23 weg, kann sich der Abstand zwischen den beiden Spannelement-Endbereichen 27, 28 vergrößern, sodass das Spannelement 23 in seinen ungespannten Zustand überführt wird.

Aus der Zeichnung ist ferner ersichtlich, dass der ununterbrochen umlaufende Ringbereich 15 dem die Spannzungen 17, 18 enthaltenden Spannbereich 16 in axialer Richtung zur Stirnseite 34 der Ringpartie 14 hin vorgelagert ist.

In diesem Zusammenhang kann vorgesehen sein, dass die Ringpartie 14 an ihrer Stirnseite 34 in Umfangsrichtung verteilt angeordnete, stirnseitig offene Verriegelungsausnehmungen 35 (der Übersichtlichkeit wegen wurde nicht bei allen Verriegelungsausnehmungen die Bezugsziffer 35 eingetragen) aufweist, denen mindestens ein Verriegelungsvorsprung 36 an der Handwerkzeugmaschine 1 zugeordnet ist. Beim Ausführungsbeispiel befindet sich der Verriegelungsvorsprung 36 am hinteren Ende des Spannhalses 4 und steht von diesem radial ab. Beim Aufstecken des Vorsatzgerätes 5 gelangt der Verriegelungsvorsprung 36 in formschlüssigen Eingriff mit einer der Verriegelungsausnehmungen 35. Auf diese Weise wird eine formschlüssige, drehfeste Verbindung zwischen dem Vorsatzgerät 5 und der Werkzeugmaschine 1 hergestellt. Das Vorsatzgerät 5 kann in unterschiedlichem Winkellagen an die Werkzeugmaschine 1 angesteckt werden. Die Anzahl der Winkellagen entspricht der Anzahl der Verriegelungsausnehmungen 35. In jeder Winkellage des Vorsatzgerätes 5 greift der Verriegelungsvorsprung 36 in eine andere der Verriegelungsausnehmung 35 ein.

Die Anordnung könnte auch umgekehrt so getroffen sein, dass sich die Verriegelungsausnehmungen an der Werkzeugmaschine und der mindestens eine Verriegelungsvorsprung am Vorsatzgerät befindet.

## Patentansprüche

1. Vorrichtung zum Befestigen eines Vorsatzgerätes (5) an einer Handwerkzeugmaschine (1) wie Bohrmaschine oder dergleichen, wobei die Handwerkzeugmaschine (1) eine motorisch antreibbare Antriebswelle (2) aufweist, die vor einen konzentrisch zur Antriebswelle (2) angeordneten Spannhals (4) vorsteht, und das Vorsatzgerät (5) eine mit der Antriebswelle (2) kuppelbare Eingangswelle (6) und eine zur Eingangswelle (6) konzentrische, auf den Spannhals (4) steckbare und mit diesem verspannbare Ringpartie (14) aufweist, die einen Spannbereich (16) mit mindestens einer Spannzunge (17, 18) bildet, wobei dem Spannbereich (16) ein ihn in Umfangsrichtung umschließendes und die mindestens eine Spannzunge (17, 18) übergreifendes Spannelement (23) zugeordnet ist, das zwischen einem ungespannten Zustand und einem gespannten Zustand verstellbar ist und in seinem ungespannten Zustand ein Aufstecken und Abziehen der Ringpartie (14) vom Spannhals (4) gestattet und in seinem gespannten Zustand gegen den Spannbereich (16) und die mindestens eine Spannzunge (17, 18) wirkt, sodass die Ringpartie (14) mit dem Spannhals (4) verspannt wird, **dadurch gekennzeichnet, dass** die mindestens eine Spännzunge (17, 18) in Umfangsrichtung verläuft, so dass die mindestens eine Spannzunge (17, 18) in Umfangsrichtung einenends in den sonstigen Spannbereich (16) übergeht und ansonsten freigeschnitten ist, wobei die mindestens eine Spannzunge (17, 18) eine größere Dicke als der sonstige Spannbereich (16) aufweist und bei ungespanntem Spannelement (23) nach radial außen hin etwas über den sonstigen Spannbereich (16) vorsteht, und dass die Ringpartie (14) einen in axialer Richtung dem Spannbereich (16) benachbarten, bei auf den Spannhals (4) gesteckter Ringpartie (14) auf dem Spannhals (4) sitzenden Zentrier-Ringbereich (15) bildet, der in Umfangsrichtung ununterbrochen umläuft, so dass er beim Festspannen der Ringpartie (14) auf dem Spannhals (4) unverändert bleibt.

2. Vorrichtung nach Anspruch 1, **dadurch gekennzeichnet, dass** der Spannbereich (16) mindestens zwei in Umfangsrichtung mit gleichmäßiger Verteilung hintereinander angeordnete Spannzungen (17, 18) aufweist.

3. Vorrichtung nach einem der Ansprüche 1 oder 2, **dadurch gekennzeichnet, dass** das Spannelement (23) von einem Spannband (24) gebildet wird.

4. vorrichtung nach einem der Ansprüche 1 bis 3, **dadurch gekennzeichnet, dass** der Spannbereich (16) eine umlaufende Ringnut (25) aufweist, in die das Spannelement (23) einsitzt.

5. Vorrichtung nach einem der Ansprüche 1 bis 4, **dadurch gekennzeichnet, dass** das Spannelement (23) mittels einer an ihm angeordneten Exzentereinrichtung (26) aus seinem ungespannten Zustand in seinen gespannten Zustand überführbar ist.

6. Vorrichtung nach einem der Ansprüche 1 bis 5, **dadurch gekennzeichnet, dass** der Zentrier-Ringbereich (15) dem Spannbereich (16) in axialer Richtung zur Stirnseite (34) der Ringpartie (14) vorgelagert ist.

7. Vorrichtung nach Anspruch 6, **dadurch gekennzeichnet, dass** die Ringpartie (14) an ihrer Stirnseite (34) in Umfangsrichtung verteilt angeordnete, stirnseitig offene Verriegelungsausnehmungen (35) oder vorstehende Verriegelungsvorsprünge aufweist, denen mindestens ein Verriegelungsvorsprung (36) bzw. mindestens eine Verriegelungsausnehmung an der Handwerkzeugmaschine (1) zugeordnet ist, der bzw. die beim Aufstecken der Ringpartie (14) auf den Spannhals (4) mit einer der Verriegelungsausnehmungen bzw. einem der Verriegelungsvorsprünge in Eingriff gelangt.

## Claims

1. Device for securing an attachment (5) to a hand-held machine tool (1) such as a power drill or the like, wherein the hand-held machine tool (1) is provided with a motor-driven drive shaft (2) projecting from a collar (4) concentric with the drive shaft (2) and the attachment (5) is provided with an input shaft (6) which can be coupled to the drive shaft (2) and with an annular section (14) concentric with the input shaft (6) and capable of being fitted and clamped to the collar (4) to form a clamping region (16) with at least one clamping tab (17, 18), wherein the clamping region (16) is assigned a clamping element (23) enclosing it in the circumferential direction and overlapping the at least one clamping tab (17, 18), which is capable of adjustment between a non-clamped state and a clamped state and in its non-clamped state allows the annular section (14) to be pushed onto and pulled off the collar (4) and in its clamped state acts against the clamping region (16) and the at least one clamping tab (17, 18), so that the annular section (14) is clamped to the collar (4), **characterised in that** the at least one clamping tab (17, 18) extends in the circumferential direction, so that the at least one clamping tab (17, 18) at one end merges into the remaining clamping region (16) in the circumferential direction while being otherwise cut free, wherein the at least one clamping tab (17, 18) has a greater thickness than the remaining clamping region (16) and slightly projects radially outwards from the remaining clamping region (16) in the non-clamped state of the clamping element (23), and **in that** the annular section (14) forms a centring annular region (15) adjacent to the clamping region (16) in the axial direction and sitting on the collar (4) when the annular section (14) is fitted to the collar (4), the said annular region being continuous in the circumferential direction, so that it remains unchanged when the annular section (14) is clamped to the collar (4).

2. Device according to claim 1, **characterised in that** the clamping region (16) is provided with at least two clamping tabs (17, 18) distributed evenly one behind the other in the circumferential direction.

3. Device according to claim 1 or 2, **characterised in that** the clamping element (23) is represented by a retaining strap.

4. Device according to any of claims 1 to 3, **characterised in that** the clamping region (16) has a continuous annular groove (25) in which the clamping element (23) is seated.

5. Device according to any of claims 1 to 4, **characterised in that** the clamping element (23) can be moved from its non-clamped to its clamped state by means of an eccentric device (26) located thereon.

6. Device according to any of claims 1 to 5, **characterised in that** the centring annular region (15) is located in front of the clamping region (16) in the axial direction towards the end face (34) of the annular section (14).

7. Device according to claim 6, **characterised in that** the end face (34) of the annular section (14) is provided with locking recesses (35) open towards the end face or with locking projections (36) distributed in the circumferential direction, to which is assigned at least one locking projection (36) or locking recess on the hand-held machine tool (1), which engages one of the locking recesses or locking projections as the annular section (14) is pushed onto the collar (4).

## Revendications

1. Dispositif pour fixer un accessoire (5) sur une machine-outil portative (1) telle qu'une perceuse ou analogue, dans lequel la machine-outil portative (1) présente un arbre d'entraînement (2) pouvant être entraîné par un moteur et qui fait saillie par rapport à un manchon de serrage (4) placé concentriquement à l'arbre d'entraînement (2), et l'accessoire (5) présente un arbre d'entrée (6) pouvant être accouplé à l'arbre d'entraînement (2) et une partie annulaire (14) concentrique à l'arbre d'entrée (2), enfichable sur le manchon de serrage (4) et pouvant être serrée sur celui-ci, partie annulaire qui forme une zone de serrage (16) avec au moins une languette de serrage (17, 18), dans lequel il est associé à la zone de serrage (16) un élément de serrage (23) l'entourant dans la direction circonférentielle et recouvrant la languette de serrage (17, 18) au nombre d'au moins une, élément qui est mobile entre un état non serré et un état serré et autorise, à l'état non serré, un enfilement et un retrait de la partie annulaire (14) par rapport au manchon de serrage (4) et, à l'état serré, agit contre la zone de serrage (16) et contre la languette de serrage (17, 18) au nombre d'au moins une, de sorte que la partie annulaire (14) peut être serrée sur le manchon de serrage (4), **caractérisé en ce que** la languette de serrage (17, 18) au nombre d'au moins une s'étend dans la direction circonférentielle, de sorte que la languette de serrage (17, 18) au nombre d'au moins une se raccorde dans la direction circonférentielle à une extrémité avec le reste de la zone de serrage (16) et est sinon dégagée, la languette de serrage (17, 18) au nombre d'au moins une présentant une épaisseur plus grande que le reste de la zone de serrage (16) et faisant saillie radialement vers l'extérieur par rapport au reste de la zone de serrage (16) quand l'élément de serrage (23) n'est pas serré, et **en ce que** la partie annulaire (14) forme une zone annulaire de centrage (15) voisine de la zone de serrage (16) dans la direction axiale et reposant sur le manchon de serrage (4) quand la partie annulaire (14) est enfilée sur le manchon de serrage (4), zone annulaire qui s'étend de manière ininterrompue dans la direction circonférentielle, de sorte qu'elle reste inchangée lors du serrage de la partie annulaire (14) sur le manchon de serrage (4).

2. Dispositif selon la revendication 1, **caractérisé en ce que** la zone de serrage (16) présente au moins deux languettes de serrage (17, 18) disposées avec une répartition l'une derrière l'autre dans la direction circonférentielle.

3. Dispositif selon l'une des revendications 1 ou 2, **caractérisé en ce que** l'élément de serrage (23) est formé par un collier de serrage (24).

4. Dispositif selon l'une des revendications 1 à 3, **caractérisé en ce que** la zone de serrage (16) présente une rainure annulaire circonférentielle (25) dans laquelle se place l'élément de serrage (23).

5. Dispositif selon l'une des revendications 1 à 5, **caractérisé en ce qu'**au moyen d'un dispositif excentrique (26) placé sur lui, l'élément de serrage (23) peut être transféré de son état non serré à son état serré.

6. Dispositif selon l'une des revendications 1 à 6, **caractérisé en ce que** la zone annulaire de centrage (15) est placée devant la zone de serrage (16) dans la direction axiale dirigée vers la face frontale (34) de la partie annulaire (14).

7. Dispositif selon la revendication 6, **caractérisé en ce que** la partie annulaire (14) présente sur sa face frontale (34), répartis dans la direction circonférentielle, des évidements de verrouillage (35) frontalement ouverts ou des saillies de verrouillage saillantes, auxquels est associée au moins une saillie de verrouillage (36) resp. au moins un évidement de verrouillage sur la machine-outil portative (1), saillie ou évidement qui, lors de l'enfilement de la partie annulaire (14) sur le manchon de serrage (4), se met en prise avec l'un des évidements de verrouillage, resp. l'une des saillies de verrouillage.
